# EUROPÄISCHE PATENTSCHRIFT

(11) **EP 1 535 587 B1**
(45) Veröffentlichungstag und Bekanntmachung des Hinweises auf die Patenterteilung: **07.11.2007**
(21) Anmeldenummer: 03027104.3
(22) Anmeldetag: 26.11.2003
(51) Int. Cl.: A61C 13/00

(54) **Verfahren zur Herstellung eines dentalen Formteils**
Method for manufacturing a dental workpiece
Procédé pour la fabrication d'une pièce dentaire

(43) Veröffentlichungstag der Anmeldung: 01.06.2005
(73) Patentinhaber: DeguDent GmbH, 63457 Hanau-Wolfgang (DE)
(72) Erfinder: Von Schroeter, Philip, Dr., 63517 Rodenbach (DE); Fecher, Stefan, 63867 Johannesberg (DE)
(74) Vertreter: Stoffregen, Hans-Herbert

(56) Entgegenhaltungen:
- WO-A-02/45614
- DE-A- 19 930 564

## Beschreibung

Die Erfindung bezieht sich auf ein Verfahren zur Herstellung eines Formteils in Form eines dentalen Objekts wie Käppchen oder Brückengerüst, wobei das Formteil aus einem Rohling durch spanende Bearbeitung herausgearbeitet und die Bearbeitung mit Durchtrennen einer stegförmigen Verbindung zwischen dem Formteil und verbliebenem Rohling beendet wird.

Bei konventionellen Methoden zur Herstellung von künstlichen Zahnkronen bzw. Zahnbrücken wird nach der zahnärztlichen Präparation ein Abdruck des Kiefers angefertigt, um über Gipsabformung ein Positivmodell der Situation im Mund herzustellen. Auf ein entsprechendes sogenanntes Meistermodell kann ein Grundgerüst in Wachs oder Kunststoff modelliert werden, um sodann z.B. durch Wachsausschmelzverfahren, Kopierfräsen oder Schleifen ein Modell des Grundgerüsts in Metall auszuführen und gegebenenfalls mit Porzellan zu überbrennen.

Der EP 0 389 461 ist ein Verfahren zur Herstellung von Zahnkronen-Onlays zu entnehmen wobei zunächst ein Abdruck der auszuführenden Zahnkavität und sodann durch Kopierfräsen aus einem verdichteten oder vorgesinterten Rohling ein Körper hergestellt wird, der zur Herstellung des Onlays zu seiner Enddichte gesintert wird. Allerdings sind Zahnkronen und -brücken zu Onlays verschiedene Produkte, die zahnmedizinische Indikation ist eine andere. So werden Onlays in Kavitäten eingepasst und bzgl. der geometrischen Form stets konvex geformt. Demgegenüber werden Zahnkronen bzw. -brücken auf einen Zahnstumpf aufgepasst und haben die Form eines Käppchens. Hierdurch bedingt ergeben sich dünn auslaufende Berandungen, die technologisch schwierig zu handhaben sind.

Aus der WO 99/47065 ist ein Verfahren zur Herstellung von auf wenigstens einen vorpräparienen Zahnstumpf aufpassbaren künstlichen Zahnersatz aus gepresstem, feinem Keramikpulver bekannt, wobei unter Berücksichtigung der Schrumpfung die innere Oberfläche eines vollkeramischen Grundgerüsts aus biologisch verträglichem Material berechnet wird, indem die geometrischen Verhältnisse im Mund des Patienten abgetastet und digitalisiert, die Daten um einen die Sinterschrumpfung exakt kompensierenden Vergrößerungsfaktor in allen Richtungen linear vergrößert und sodann durch Materialabtrag aus einem Rohling ein Grundgerüst mit einer inneren und einer äußeren Oberfläche herausgearbeitet wird.

Ein entsprechendes Herstellungsverfahren beinhaltet eine Anstiftung des spanend zu bearbeitenden, also zu fräsenden bzw. zu schleifenden Formteils zumeist an dessen äußeren Flanken, wobei bei dentalen Objekten eine Anstiftung bukkal oder lingual, selten approximal erfolgt. Während der Bearbeitung wird das Formteil durch die Anstiftung gehalten, um nach Beendigung maschinell grob abgetrennt und manuell so bearbeitet zu werden, dass die Wandstärke im betreffenden Bereich etwa der des übrigen Formteils also bei einem dentalen Objekt die eines Käppchens oder Zahngerüsts aufweist. Bei weichen Werkstoffen ist die Nachbearbeitung mit einem erheblichen Risiko der Zerstörung verbunden, wohingegen bei härten Werkstoffen ein hoher Zeit- und Werkzeugaufwand erforderlich ist. Des Weiteren ist das Risiko gegeben, dass bei der Nachbearbeitung eine empfohlene Wandstärke unterschritten wird.

Nach der WO-A- 2002/45614 wird aus einem Keramikrohling mittels z. B. eines Fräswerkzeuges zum Beispiel eine Zahnbrücke hergestellt, die über Haltestege mit dem verbleibenden Rest des Rohlings verbunden ist.

Bei einem Verfahren zur Herstellung keramischer Teile wie Zahnkronen nach der DE-A 199 30 564 wird ein aus keramischem Material bestehender Rohling während des spanenden Bearbeitens stets bereichsweise in einer Einbettmasse fixiert.

Alternative Verfahren zur Herstellung von dentalen Formteilen sehen anstelle einer äußeren Anstiftung einen entfernbaren Sockel vor, mittels dem der zu bearbeitende Formkörper fixiert wird.

Eine Anstiftung erübrigt sich auch bei dem sogenannten Tauchverfahren. Dabei wird durch Tauchen eines Zahnstumpfmodells in einen keramischen Schlicker eine Haftung zum Stumpf hergestellt, die einer äußeren Fräsbearbeitung standhält. Nachteilig sind jedoch die geringe Festigkeit der Schlickerkeramik sowie Probleme der Materialkonsistenzen und - lagerung.

Der Erfindung liegt das Problem zugrunde, ein Verfahren der eingangs genannten Art so weiterzubilden, dass eine präzise Bearbeitung des Rohlings zur Herstellung eines Formteils, insbesondere dentalen Objekts wie Käppchen oder Brückengerüst möglich ist, ohne dass eine aufwendige bzw. risikobehaftete Nachbearbeitung zum Entfernen einer Anstiftung erforderlich ist.

Das Problem wird erfindungsgemäß im Wesentlichen dadurch gelöst, dass das Formteil aus dem Rohling derart herausgearbeitet wird, dass bei Fertigstellung von Außen- und Innenkontur des Formteils dieses mit dem verbliebenen Rohling über einen am äußeren Rand des Formteils umlaufenden Steg verbunden bleibt und dass anschließend der umlaufende Steg durchtrennt wird. Dabei erfolgt insbesondere ein Durchtrennen durch zirkuläres, d.h. umlaufendes Fräsen. Auch sollte das Formteil derart bearbeitet werden, dass der umlaufende Steg am äußeren Rand des Formteils des dentalen Objekts verläuft. Bei einer Bearbeitung von zwei Seiten, nämlich von okklusal und von basal, befindet sich der umlaufende Steg Verfahrensbedingt im Bereich des größten Umfangs des Käppchens, in der Regal an oder nahe an dessen Rand.

Erfindungsgemäß wird ein spanendes Bearbeiten eines Formteils mit einer Strategie vorgeschlagen, bei der aus einem z.B. vorgesinterten oder dichtgesinterten Keramikrohteil eine Bearbeitung durch insbesondere Schruppen und Schlichten von Innen- und Außenkontur dergestalt erfolgt, dass Außenbearbeitung des Formteils mit der Entfernung des umlaufenden Stegs, der auch als zirkulärer Rand zu bezeichnen ist, beendet wird, wodurch ein anschließendes Nachbearbeiten dem Grunde nach überflüssig wird.

Dadurch, dass eine Anstiftung im üblichen Sinne nicht abgetrennt werden muss, ergeben sich Zeitersparnisse bei der maschinellen Bearbeitung. Auch entfällt ein Nachbearbeiten mit dem Risiko, dass die Wandung im Bereich der Verbindung mit dem Rohling vorgegebene Werte unterschreitet. Erfindungsgemäß erfolgt eine Risikominimierung bei der manuellen Nachbearbeitung, da allein ein kurzes zirkuläres Verputzen des äußeren Formteilrands erfolgt, ohne dass es einer Bearbeitung der Wandung bedarf. Eine Automatisierung wird vereinfacht, auch ergibt sich eine einfache CAD-Modellierung.

Ein weiterer Vorteil des umlaufenden Stegs bzw. zirkulären Rands ist darin zu sehen, dass das von dem Rohling gelöste Objekt unmittelbar von einer gepolsterten Aufnahme aufgefangen werden kann, ohne dass die Gefahr eines vorherigen Wegklappens des Formteils zu dem Rohling hin besteht.

Insbesondere ist vorgesehen, dass zur Ausbildung des Formteils zunächst ein Grobfräsen von außen und innen mit mäanderförmig verfahrbarem Fräswerkzeug erfolgt. Anschließend erfolgt ein Feinfräsen der Außen- und Innenkontur, wobei eine zirkuläre Strategie zu bevorzugen ist. Zum Schluss erfolgt ein Schlichten (Feinfräsen) der Innenseite bzw. Innenkontur, um nach vollständiger Bearbeitung des Formteils die im äußeren Randbereich des Formteils noch verbleibende umlaufende Verbindung (Steg) durch zirkuläres Ausfräsen zu durchtrennen, indem das Fräswerkzeug in der Tiefe zugestellt wird.

Mit dem erfindungsgemäßen Verfahren können Rohlinge aus vorgesinterter Keramik wie Zirkonoxid und Aluminiumoxid aber auch dichtgesinterter Keramik entsprechender Materialien bearbeitet werden. Dabei ist als wesentlicher Hauptvorteil die umlaufende Verbindung zu dem Rohling und nicht die nach dem Stand der Technik benötigte punktuelle Verbindung zu sehen, die ein mit erheblichen Risiken verbundenes Nachbearbeiten des Formteils wie Käppchens oder Zahngerüsts erforderlich macht.

Weitere Einzelheiten, Vorteile und Merkmale der Erfindung ergeben sich nicht nur aus den Ansprüchen, den diesen zu entnehmenden Merkmalen - für sich und/oder in Kombination -. sondern auch aus der nachfolgenden Beschreibung eines der Zeichnung zu entnehmenden Ausführungsbeispiels.

Es zeigen:
- Fig. 1: eine Prinzipdarstellung eines nach dem Stand der Technik bearbeiteten Käppchens und
- Fig. 2: eine Prinzipdarstellung eines erfindungsgemäß bearbeiteten Käppchens.

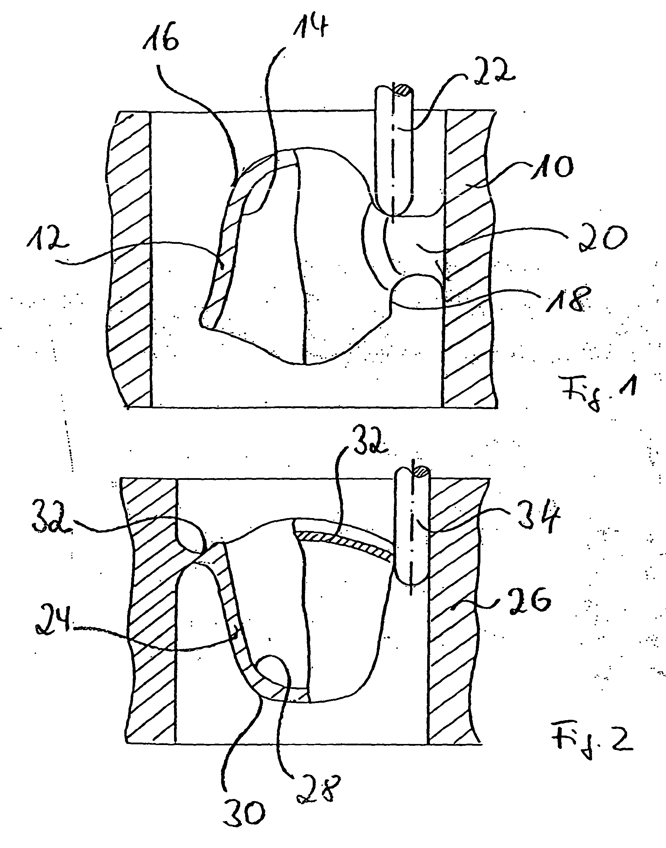

In Fig. 1 ist ein aus einem Rohling 10 herausgearbeitetes Käppchen dargestellt, das z.B. nach der Lehre der WO 99/47065 hergestellt worden ist. Mit anderen Worten wird in einer aus CAD/CAM-Verfahren bekannten Produktionstechnik aufgrund der Abtastung und Digitalisierung eines Positivmodells der Situation in einem Patientenmund aus dem Rohling 10 das Käppchen 12 mit einer inneren Fläche 14 und einer äußeren Oberfläche 16 herausgearbeitet. Hierzu werden an eine geeignete Werkzeugmaschine wie Fräswerkzeug Steuerbefehle gegeben, um aus dem Rohling 10 das Käppchen 12 herzustellen. Nach dem durch die Fig. 1 verdeutlichtem Stand der Technik bleibt das Käppchen 12 mit dem Rohling 10 über eine von einer äußeren Flanke 18 (z.B. bukkal oder lingual) ausgehende Anstiftung 20 verbunden, die nach Bearbeitung der Innenfläche 14 und der Außenfläche 16 mit einem Werkzeug wie Fräswerkzeug 22 durchtrennt wird. Aufgrund der Stärke der Anstiftung 20 kann dabei der Nachteil auftreten, dass das Käppchen 16 vor dem endgültigen Durchtrennen der Anstiftung 20 wegkippt, also sich in Richtung des Rohlings 10 verschwenkt, so dass bei dünnwandigen Teilen die Gefahr einer Beschädigung erwächst. Nach dem Durchtrennen der Anstiftung 20 ist in der Regel eine erhebliche manuelle Nachbearbeitung erforderlich, um die Wandstärke des Käppchens 12 im Bereich der zuvorigen Anstiftung an die übrige Wandstärke anzupassen. Dabei kann insbesondere bei weichen bzw. spröden Werkstoffen der Nachteil entstehen, dass die Wandung durchbricht bzw. dass eine Mindestwandstärke unterschritten wird.

Erfindungsgemäß kann ein Formteil - im Ausführungsbeispiel der Fig. 2 ein Käppchen 24 - aus einem Rohling 26 ebenfalls nach einem geeigneten CAD/CAM-System hergestellt werden, wobei das Käppchen 24 nach vollständiger Bearbeitung von Innenkontur 28 und Außenkontur 30 über einen umlaufenden, also zirkulären Rand oder Steg 32 mit dem Rohling 26 verbunden bleibt. Dabei erstreckt sich der umlaufende Steg 34 im äußeren Randbereich des Käppchens 24 selbst. Nach der Beendigung der Bearbeitung der Innen- und Außenkontur 28, 30 erfolgt mit einem Werkzeug 34 ein Durchtrennen des umlaufenden Stegs 32 durch zirkuläres Fräsen, wobei das Werkzeug 34 in der Tiefe zugestellt wird.

Dadurch, dass durch einen sehr schmalen Steg das Käppchen 24 mit dem verbliebenen Rohling 26 verbunden ist, kann ein Ausfräsen des umlaufenden Stegs 32 derart erfolgen, dass das Käppchen 26 quasi ohne Positionsänderung senkrecht herabfällt und von einer gepolsterten Aufnahme aufgefangen werden kann. Eine Nachbearbeitung im Trennbereich, also im äußeren Rand, ist nur in geringem Umfang erforderlich und kann leicht im durchgesinterten Zustand durchgeführt werden, ohne dass die Gefahr eines Bruchs oder die Möglichkeit, dass unzulässig dünne Wandstärken entstehen, gegeben ist.

Um das Käppchen 24 aus dem Rohling 26 herauszuarbeiten, ist bevorzugterweise folgende Frässtrategie anzuwenden. Zunächst erfolgt ein Schruppen, also Grobfräsen, von Außen- und Innenfläche bei mäanderförmiger Bewegung des Werkzeugs. Anschließend wird Außen- und Innenbereich in zirkulärer Strategie geschlichtet, d.h., durch Feinfräsen bearbeitet.

Bei den entsprechenden Schritten kann eine Dreiachsfräsbearbeitung mit zusätzlicher Wendemöglichkeit des Rohlings 26 zur Anwendung gelangen. Vor Durchtrennen des umlaufenden Stegs 32 erfolgt ein Schlichten der Innenseite bzw. -fläche 28 des Käppchens 24. Dabei wird zunächst die Kavität bearbeitet und sodann der umlaufende Steg bzw. Rand 32 durch zirkuläres Fräsen durchtrennt.

Erwähntermaßen bedarf es nur einer geringen manuellen Bearbeitung zum Entfernen von Stegresten, wodurch eine Risikominimierung erfolgt. Weitere Vorteile sind einfachere CAD-Modellierung, kürzere Fräsbahnberechnung, einfache Automatisierung. Ferner ist das Formteil weitergehend fertiggestellt als eines mit Anstiftungsrest und damit höherertig.

## Patentansprüche

1. Verfahren zur Herstellung eines Formteils (24) in Form eines dentalen Objekts wie Käppchen oder Brückengerüst, wobei das Formteil aus einem Rohling (26) durch spanende Bearbeitung herausgearbeitet und die Bearbeitung mit Durchtrennen einer stegförmigen Verbindung (32) zwischen dem Formteil und verbliebenem Rohling beendet wird,
**dadurch gekennzeichnet,**
**dass** das Formteil (24) aus dem Rohling (26) derart herausgearbeitet wird, dass bei Fertigstellung von Außen- und Innenkontur (28, 30) des Formteils dieses mit dem verbliebenen Rohling über einen im äußeren Randbereich des Formteils umlaufenden Steg (32) verbunden bleibt und dass anschließend der umlaufende Steg durchtrennt wird.

2. Verfahren nach Anspruch 1,
**dadurch gekennzeichnet,**
**dass** der umlaufende Steg durch zirkuläres Fräsen durchtrennt wird.

3. Verfahren nach Anspruch 1,
**dadurch gekennzeichnet,**
**dass** bei Durchtrennen des umlaufenden Stegs (32) das Formteil (24) von einer gepolsterten Aufnahme in einer Position aufgefangen wird, die der Position oder in etwa Position des Formteils in dem Rohling (26) entspricht.

4. Verfahren nach Anspruch 1,
**dadurch gekennzeichnet,**
**dass** das von dem Rohling (26) abgetrennte Formteil (24) im Bereich des entfernten umlaufenden Stegs (32) zirkulär verputzt wird.

5. Verfahren nach Anspruch 1,
**dadurch gekennzeichnet,**
**dass** zur Herstellung des Formteils (24) zunächst Außenkontur (30) und sodann Innenkontur (28) bearbeitet werden.

6. Verfahren nach Anspruch 1,
**dadurch gekennzeichnet,**
**dass** zur Herstellung des Formteils (24) zunächst ein Grobfräsen insbesondere mit mäanderförmiger Strategie und sodann ein Feinfräsen insbesondere mit zirkulärer Strategie erfolgt.

7. Verfahren nach Anspruch 1,
**dadurch gekennzeichnet,**
**dass** unmittelbar vor Durchtrennen des umlaufenden Stegs (32) die Kavität des Formteils (24) durch Feinfräsen bearbeitet wird.

8. Verfahren nach Anspruch 1,
**dadurch gekennzeichnet,**
**dass** der Rohling (26) schwenkbar gelagert und mittels emlang drei Achsen bewegbaren Fräswerkzeugs (22) bearbeitet wird.

9. Verfahren nach Anspruch 1,
**dadurch gekennzeichnet,**
**dass** als Rohling (26) ein solcher aus einem vorgesinterten Keramikmaterial wie Zirkonoxid oder Aluminiumoxid verwendet wird.

10. Verfahren nach Anspruch 1,
**dadurch gekennzeichnet,**
**dass** als Rohling (26) ein solcher aus einem dichtgesinterten Keramikmaterial wie Zirkonoxid oder Aluminiumoxid verwendet wird.

## Claims

1. Method for manufacturing a molded piece (24) in the form of a dental object such as cap or bridgework, whereby the molded piece is brought out from a blank mold (26) by machine cutting, and the working is ended with severing a web-shaped connection (32) between the molded piece and the remaining mold blank,
**characterized in**
**that** the molded piece (24) is brought out from the mold blank (26) in such a way that, at completion of outer and inner contour (28, 30) of the molded piece, the latter remains connected with the remaining blank mold via a circumferential web (32) in the outer marginal region of the molded piece, and that, subsequently, the circumferential web is severed.

2. Method according to claim 1,
**characterized in**
**that** the circumferential web is split via circular milling.

3. Method according to claim 1,
**characterized in**
**that** with severing the circumferential web (32), the molded piece (24) is caught from a padded receptacle in a position, which corresponds to the position, or approximately to the position of the molded piece in the mold blank (26).

4. Method according to claim 1,
**characterized in**
**that** the molded piece (24), separated from the mold blank (26) is cleaned circularly in the area of the removed circumferential web (32).

5. Method according to claim 1,
**characterized in**
**that** for the manufacture of the molded piece (24) at first the outer contour (30) and then the inner contour (28) are machined.

6. Method according to claim 1,
**characterized in**
**that** for the manufacture of a molded piece (24), a rough milling takes place first, in particular with a meander-shaped strategy, and then a fine milling, in particular with a circular strategy.

7. Method according to claim 1,
**characterized in**
**that** directly before severing the circumferential web (32), the cavity of the molded piece (24) is worked by fine milling.

8. Method according to claim 1,
**characterized in**
**that** the mold blank (26) is mounted rotatable and is machined along three axes by means of a movable milling tool (22).

9. Method according to claim 1,
**characterized in**
**that** as blank mold (26) is used one made of pre-sintered ceramics material, such as zircon oxide or aluminium oxide.

10. Method according to claim 1,
**characterized in**
**that** as blank mold (26) is used one made of densely sintered ceramics material, such as zircon oxide or aluminium oxide.

## Revendications

1. Procédé de production d'une pièce moulée (24) sous forme d'un objet dentaire tel qu'une chape ou une structure de bridge, sachant que la pièce moulée est façonnée à partir d'une ébauche (26) par enlèvement de copeaux et que son usinage se termine par le sectionnement d'une liaison (32) entre la pièce moulée et l'ébauche restante,
**caractérisé en ce**
**que** la pièce moulée (24) est façonnée à partir de l'ébauche (26) de telle manière que, une fois les contours extérieurs et intérieurs (28, 30) de la pièce moulée terminés, celle-ci n'est reliée au reste de l'ébauche plus que par un segment circulaire (32) sur le bord extérieur de la pièce moulée, et que ce segment circulaire est ensuite sectionné.

2. Procédé selon la revendication 1,
**caractérisé en ce**
**que** le segment circulaire est sectionné par fraisage circulaire.

3. Procédé selon la revendication 1,
**caractérisé en ce**
**que**, lors du sectionnement du segment circulaire (32), la pièce moulée (24) est réceptionnée par un logement rembourré dans une position correspondant à la position exacte ou approximative de la pièce moulée dans l'ébauche (26).

4. Procédé selon la revendication 1,
**caractérisé en ce**
**que** la pièce moulée (24) séparée de l'ébauche (26) est ébarbée de façon circulaire dans la zone du segment circulaire (32) sectionné.

5. Procédé selon la revendication 1,
**caractérisé en ce**
**que**, pour la fabrication de la pièce moulée (24), est usiné tout d'abord le contour extérieur (30) puis le contour intérieur (28).

6. Procédé selon la revendication 1,
**caractérisé en ce**
**que**, pour la fabrication de la pièce moulée (24), est réalisé tout d'abord un fraisage grossier par mouvement sinueux puis un fraisage fin en particulier par mouvement circulaire.

7. Procédé selon la revendication 1,
**caractérisé en ce**
**que** la cavité de la pièce moulée (24) est usinée par fraisage fin dès le sectionnement du segment circulaire (32).

8. Procédé selon la revendication 1,
**caractérisé en ce**
**que** l'ébauche (26) est positionnée de manière orientable et est usinée à l'aide d'un outil de fraisage (22) se déplaçant le long de trois axes.

9. Procédé selon la revendication 1,
**caractérisé en ce**
**qu'**une ébauche en matériau céramique préfritté tel que de l'oxyde de zirconium ou de l'oxyde d'aluminium est utilisée en tant qu'ébauche (26).

10. Procédé selon la revendication 1,
**caractérisé en ce**
**qu'**une ébauche en matériau céramique fritté à densité maximale tel que de l'oxyde de zirconium ou de l'oxyde d'aluminium est utilisée en tant qu'ébauche (26).
